# EUROPÄISCHE PATENTSCHRIFT

(11) **EP 3 971 531 B1**
(45) Veröffentlichungstag und Bekanntmachung des Hinweises auf die Patenterteilung: **12.07.2023**
(21) Anmeldenummer: 21195698.2
(22) Anmeldetag: 09.09.2021
(51) Int. Cl.: G01D 4/00, H04B 7/02

(54) **VERFAHREN ZUM BETRIEB EINER SEKTOR-ANTENNEN-ANORDNUNG SOWIE SEKTOR-ANTENNEN-ANORDNUNG**
METHOD FOR OPERATING A SECTOR ANTENNA ARRANGEMENT AND A SECTOR ANTENNA ARRANGEMENT
PROCÉDÉ DE FONCTIONNEMENT D'UN AGENCEMENT D'ANTENNE SECTORIELLE, AINSI QU'AGENCEMENT D'ANTENNE SECTORIELLE

(30) Priorität: 22.09.2020 DE 102020124638
(43) Veröffentlichungstag der Anmeldung: 23.03.2022
(73) Patentinhaber: Diehl Metering Systems GmbH, 90451 Nürnberg (DE)
(72) Erfinder: Winter, Stefanie, 91183 Abenberg (DE); Tränkler, Michael, 91186 Büchenbach (DE)
(74) Vertreter: Diehl Patentabteilung

(56) Entgegenhaltungen:
- DE-A1- 10 110 256
- DE-A1-102016 213 235
- DE-T2- 69 522 902
- DE-T2- 69 619 557
- US-A1- 2004 235 527

## Beschreibung

Die vorliegende Erfindung betrifft ein Verfahren zum Betrieb einer Sektor-Antennen-Anordnung gemäß Anspruch 1. Ferner betrifft die vorliegende Erfindung eine Anordnung umfassend Verbrauchszähler und eine Basisstation mit einer Sektor-Antennen-Anordnung gemäß Anspruch 5.

### Technologischer Hintergrund

Die Datenübertragung von Messeinheiten, wie z. B. Sensoren, Verbrauchsmessern, Verbrauchszähler bzw. Verbrauchsdatenerfassungsgeräten oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchszählern, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen. Die Übertragung der Verbrauchsdaten an den Versorger kann auf unterschiedliche Arten erfolgen. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchszähler übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich an übergeordnete Datensammler, wie z. B. Ausleseeinheiten, Konzentratoren, Netzwerkknotenpunkte oder Schaltzentralen eines Versorgers.

Datentelegramme sind in der Regel aus einer Mehrzahl von Datenpaketen aufgebaut. Die SRD- oder ISM-Frequenzbereiche haben den Vorteil, dass diese lizenzfrei sind und für die Nutzung lediglich eine allgemeine Zulassung der Frequenzverwaltung notwendig ist.

Zur Erfassung der Verbrauchsdaten werden zunehmend intelligente Messinfrastrukturen in einem Smart City Umfeld eingesetzt. In diesen Messinfrastrukturen (Verbrauchsdatenerfassungssysteme) stellen die Verbrauchszähler die Endgeräte dar, durch die an den Verbrauchsstellen Messdaten aufgenommen werden. Die Messdaten werden von den Verbrauchszählern über zwischengeschaltete Datensammler, wie z. B. Ausleseeinheiten, an ein übergeordnetes Managementsystem bzw. Head-End-System übertragen.

Für den ersten Kommunikationsweg von einem Verbrauchszähler zu einem Datensammler werden für gewöhnlich andere Übertragungswege verwendet, als für den zweiten Kommunikationsweg von einem Datensammler zum Head-End-System, da unterschiedliche Anforderungen beispielsweise an die Übertragungsbandbreite, den Energieverbrauch, die Übertragungsqualität, die Reichweite sowie die Redundanz der Systeme gestellt werden. Erste Kommunikationswege zwischen Datensammlern und Verbrauchszählern werden regelmäßig auch als Primärkommunikation bezeichnet. Der zweite Kommunikationsweg zwischen Datensammler und dem Head-End-System wird als Tertiärkommunikation bezeichnet. Ferner bezeichnet die Sekundärkommunikation die Kommunikation zwischen benachbarten Datensammlern über dedizierte Schnittstellen, welche jedoch eine zusätzliche Funkschnittstelle benötigen.

Für die Basisstationen in Smart Metering Fixed Networks können verschiedene Antennen-Typen verwendet werden. Es können omnidirektionale Antennen verwendet werden, welche typischerweise einen Gewinn von etwa 12 dBi aufweisen. Bei der Verwendung von omnidirektionalen Antennen kann ein Empfänger angeschlossen werden. Omnidirektionale Antennen bzw. Rundstrahlantennen sind für gewöhnlich als Viertelwellenstrahler oder Groundplane-Antenne ausgestaltet. Bei der klassischen Ausführung eines Viertelwellenstrahlers ist die Antennenlänge entsprechend gleich einem Viertel der Wellenlänge. Durch sogenannte "gestockte" Antennensysteme kann man auch bei Vertikalantennen einen höheren Gewinn erzielen als mit dem einfachen Viertelwellenstrahler, z.B. 12 dBi. Dieser Gewinn wird dadurch erreicht, dass die vertikale Halbwertsbreite kleiner wird. Die Rundstrahlcharakteristik bleibt dabei erhalten. Dieser Antennengewinn bringt eine größere Reichweite, was prinzipiell einen Vorteil darstellt. Grundsätzlich besteht jedoch bei hohem Aufkommen von Funktelegrammen und bei Einsatz von Rundstrahlantennen das Problem erhöhter Kollisionswahrscheinlichkeit. Aus diesem Grund werden Sektor-Antennen eingesetzt, um die Menge an Funktelegrammen pro Richtung bzw. Richtungssegment zu verringern.

Durch die Sektor-Antennen können mehrere Antennenfelder erzeugt werden. Um in der horizontalen Ebene bezüglich der Sektor-Antennen bzw. der Sektor-Antennen-Anordnung einen Gewinn (Gain) zu erzielen, können beispielsweise mehrere Halbwellendipole vor einer Reflektorwand angeordnet werden, so dass sich eine vertikale und eine horizontale Richtwirkung ergibt. Ein möglicher Hersteller von Sektor-Antennen ist Kathrein Mobile Communication. Diese Art von Sektor-Antennen wird häufig in der zellularen Mobilfunktechnik eingesetzt. Bei typischen Antennen sind in einem Gehäuse sechs Halbwellendipole vor einem geraden Metallreflektor angebracht, was auch Zwölfer-Feld genannt wird. Hierbei können sich zur Abstrahlung-Hauptkeule zusätzlich Nebenkeulen ausbilden, welche allerdings für gewöhnlich zwei Größenordnungen kleiner sind als die Hauptkeulen und damit vernachlässigbar.

Häufig werden im Smart City Umfeld jedoch Sektor-Richtantennen mit hohem Gewinn verwendet. Bei Sektor-Antennen sind mehrere Empfänger notwendig. Eine typische Sektor-Antenne weist einen Gewinn von 13 dBi und eine Halbwertsbreite von 85° auf. Um die gesamte Leistung von Sektor-Antennen zu erhalten, benötigt jede Sektor-Antenne einen eigenen Empfänger, was allerdings auch die teuerste Lösung darstellt. Aus Kostengründen werden für gewöhnlich jedoch mehrere Sektor-Antennen auf einen Empfänger geschaltet, anstatt jede Sektor-Antenne auf jeweils einen Empfänger zu schalten. Das Aufschalten mehrerer Antennen auf einen Empfänger geschieht üblicherweise mit sogenannten Kombinatoren (Combiner). Der Empfänger muss somit Signale von verschiedenen Sektor-Antennen gleichzeitig empfangen, was allerdings einen Performanceverlust zur Folge hat. Das Zusammenschalten mehrerer Antennen auf einen Empfänger führt zu einer Dämpfung und damit verbunden zu einem Verlust von ca. 3 dB. Zudem vergrößert sich der Empfangsbereich, so dass es zu einer erhöhten Zahl von Telegramm-Kollisionen kommt. Sofern ein Sender, beispielsweise ein Verbrauchszähler, von zwei Sektor-Antennen, die auf den gleichen Empfänger geschaltet sind, empfangen werden kann, können sich die empfangenen Signale, abhängig von der Phase, abschwächen oder sich sogar komplett auslöschen, wenn diese von zwei zusammengeschalteten Antennen gleichzeitig empfangen werden. Die Empfangsperformance kann sich dadurch gegenüber der Verwendung von jeweils einem Empfänger pro Antenne deutlich reduzieren.

Die DE 695 22 902 T2 beschreibt ein Verfahren sowie eine Einrichtung zur Auswahl zweier Antennen für den Empfang eines Kommunikationssignals im Mobilfunk. Hierbei werden zwei Signalempfänger gemeinsam über einen Schalter auf zwei benachbarte Antennen einer Mehrzahl von Antennen geschaltet. Zusätzlich wird einer der beiden Signalempfänger auf eine dritte Antenne geschaltet. Anhand der jeweils ermittelten Signalgütewerte werden eine Hauptantenne sowie eine Nebenantenne ausgewählt, über die empfangen werden soll.

Aus der US 2004/0235527 A1 ist ein Hochgeschwindigkeits-Voice/Daten-Mobilfunksystem bekannt, welches auf einem TDMA (Time Division Multiple Access) Verfahren beruht. Um eine Mehrzahl von Megabit-Kanälen bei einer Vielzahl von Basisstationen bei nur wenigen Funkfrequenzkanälen zur Verfügung zu stellen, sieht das System ein in Sektoren unterteiltes Schmalstrahl-Antennensystem vor, welches eine sektorbezogene Isolierung von Signalen und somit eine Mehrzahl diskreter simultaner Kommunikationen ermöglicht. Hierzu sind mehrere Antennen über eine Schaltmatrix mit dem Empfänger einer Basisstation verbunden, wodurch ein simultaner Betrieb von zwei oder mehreren Antennen innerhalb einer Funkzelle möglich wird.

Die DE 10 2016 213 235 A1 betrifft eine Vorrichtung zur Bestimmung der Position eines RFID-Senders mit einer mehrere Antennenelemente mit einer Richtcharakteristik umfassenden Antennenvorrichtung für den Bereich der Logistik oder Produktion. Aus der konkret geschalteten Richtcharakteristik und den zugeordneten Amplitudenwerten des Empfangssignals wird eine Information über die Position des Senders ermittelt. Bei dieser Vorrichtung ist jeweils eine Antenne über einen Umschalter mit einer Signalverarbeitungsvorrichtung verbunden.

Die DE 101 10 256 A1 offenbart eine Antennenkombinationsvorrichtung für eine Mehrfachträger-Basisstation in einem digitalen Mobilfunknetz. Hierbei ist eine Schaltmatrixvorrichtung vorgesehen, die Trägersignale für eine Gesamtsektorantenne über eine Antennenkombiniervorrichtung führt, wobei die Gesamtsektorantenne den gesamten, einer Basisstation zugeordneten Sektor abdeckt, und wobei die Schaltmatrixvorrichtung Trägersignale für einzelne Subsektorantennen jeweils über eine einer einzelnen Subsektorantenne zugeordneten Antennenkombi niervorrichtung führt.

Aus der DE 696 19 557 T2 ist ein Verfahren zum Bestimmen der Richtung einer beweglichen Sender/Empfänger-Station in Bezug auf eine andere Station eines Funkkommunikationsnetzes bekannt, bei dem ein Abfragesignal ausgesendet wird und der Empfang eines Antwortsignals mithilfe einer Gruppe von Antennen mit schmalem Strahlungsdiagramm erfolgt, die sequentiell umgeschaltet und auf verschiedene Azimut Winkel ausgerichtet werden. Die Richtung der Sender/Empfänger-Station in Bezug auf die andere Station des Funkkommunikationsnetzes wird aus der Amplitude des in den Antennen der Gruppe empfangenen Antwortsignals abgeleitet.

### Aufgabe der vorliegenden Erfindung

Die Aufgabe der vorliegenden Erfindung besteht darin, ein neuartiges Verfahren zum Betrieb einer Sektor-Antennen-Anordnung sowie eine neuartige Sektor-Antennen-Anordnung zur Verfügung zu stellen, so dass eine erhöhte Betriebsflexibilität bei verringerter Komponentenzahl und ohne Beeinträchtigung der Übertragungseigenschaften ermöglicht wird.

### Lösung der Aufgabe

Die vorstehende Aufgabe wird durch die gesamte Lehre des Anspruchs 1 sowie durch eine Anordnung gemäß Anspruch 5 gelöst. Zweckmä-ßige Ausgestaltungen der Erfindung sind in den Unteransprüchen beansprucht. Erfindungsgemäß ist ein Verfahren zum Betrieb einer Sektor-Antennen-Anordnung vorgesehen, vorzugsweise in einer Basisstation, insbesondere in einem Fixed-Network, wobei die Sektor-Antennen-Anordnung mindestens zwei Sektor-Antennen umfasst, welche in unterschiedliche Richtungen weisen, insbesondere in horizontaler Ebene, sowie mindestens einen Empfänger umfasst, und wobei jeweils mindestens zwei Sektor-Antennen einem Empfänger zugeordnet sind, wobei kennzeichnenderweise die zugeordneten Sektor-Antennen zeitlich veränderlich auf den Empfänger geschaltet werden.

Die Sektor-Antennen können zweckmäßigerweise dieselben Richtwirkungen aufweisen, d. h. denselben Gewinn aufweisen. Für eine horizontale 360°-Abdeckung können z. B. sechs typgleiche 60°-Sektor-Antennen verwendet werden.

Das Auslesen von Verbrauchszählern ist für gewöhnlich nur in bestimmten Zeitintervallen, z. B. einmal pro Stunde, notwendig, so dass ein Antennenumschalter anstatt eines Kombinators verwendet werden kann. Der Antennenumschalter ist erfindungsgemäß zeitgesteuert.

Es ergibt sich damit der Vorteil, dass in einem Empfänger die gleichzeitig zu verarbeitenden Signale verringert werden können, so dass es zu weniger Störungen oder Überlagerungen kommt und damit die Empfangsleistung erhöht werden kann. Ferner weisen Antennenumschalter für gewöhnlich einen geringeren Verlust, im Bereich von 0,5 bis 1,0 dB, auf, im Gegensatz zu Kombinatoren mit einem Verlust von etwa 3,0 dB. Es besteht vorteilhafterweise auch keine Gefahr mehr der Abschwächung oder Auslöschung von Signalen, welche abhängig von der Phase an zwei zusammengeschalteten Antennen ankommen. Zudem bietet die vorliegende Erfindung eine viel kostengünstigere Lösung im Vergleich zur Verwendung von separaten Empfängern für jede einzelne Sektorantenne.

Die vorliegende Erfindung bietet somit eine Möglichkeit, neben der räumlichen Aufteilung von Empfangsbereichen zusätzlich eine zeitliche Aufteilung vorzunehmen. Besonders zweckmäßig ist der Einsatz im Verbrauchszähler-Bereich bzw. Metering-Bereich oder im Bereich von Internet-of-Things (loT).

Die Sektor-Antennen-Anordnung wird erfindungsgemäß in einer Basisstation betrieben. Die Basisstation ist Teil eines Fixed Network für Smart Metering. Solch ein Fixed Network kann als hierarchisches System aufgebaut sein, welches mindestens eine zentrale Stelle bzw. Head-End-System, mindestens eine Basisstation und mindestens ein Endgerät umfasst. Die Basisstation kann in solch einem System als Datensammler für Verbrauchsdaten ausgestaltet sein. Bei dem Endgerät kann es sich um einen Sensorknoten beispielsweise für loT-Anwendungen handeln bzw. um einen Verbrauchszähler. Ein solches Verbrauchsdatenerfassungssystem kann zweckmäßigerweise eine Mehrzahl von Verbrauchszählern, eine Mehrzahl an Datensammlern, die Verbrauchsdaten von den Verbrauchzählern erfassen, sowie ein Head-End-System umfassen. Ferner kann die Verwaltung der Verbrauchsdaten und/oder Systemdaten von Datensammlern vorgenommen werden, wobei die Verbrauchsdaten und/oder Systemdaten zwischen dem einzelnen Datensammler und dem Head-End-System auf der Basis der Datensammler-spezifischen Kommunikationsfähigkeit übertragen werden.

Bei der Sektor-Antennen-Anordnung kann es sich zweckmäßigerweise um eine feste Installation handeln, insbesondere als Basisstation. Alternativ besteht die Möglichkeit, die Sektor-Antennen-Anordnung als mobile Anordnung, z. B. in einem Fahrzeug, auszugestalten. Hierbei kann die Sektor-Antennen-Anordnung vorteilhafterweise als mobile Basisstation betrieben werden. Das Aufschalten der Sektor-Antennen kann hierbei in Abhängigkeit vom Fahrweg der mobilen Basisstation vorgenommen werden, so dass beispielsweise jene Sektor-Antennen auf Empfänger geschalten werden, welche in Richtung von Endgeräten ausgerichtet sind.

Bei dem Endgerät kann es sich um einen Sensorknoten beispielsweise für loT-Anwendungen handeln bzw. um einen Verbrauchszähler. Das Endgerät kann zweckmäßigerweise energie-autark betrieben werden, so dass ein geringer Energieverbrauch wünschenswert ist. Es kann sich beim Endgerät insbesondere um ein "constrained device" handeln. Das Endgerät kann beispielsweise einen ungenauen Zeitgeber besitzen, beispielsweise einen Schwingquarz geringer Güte, so dass die interne Uhr des ersten Endgeräts von der der Basisstation abweicht. Die Basisstation kann vorteilhafterweise einen genauen Zeitgeber, beispielsweise in der Form eines Schwingquarzes mit hoher Güte, besitzen.

Ein Endgerät verfügt für gewöhnlich über eine Antenne, welche als omnidirektionale Antenne ausgestaltet sein kann. An eine omnidirektionale Antenne kann ein Empfänger, Sender oder Transceiver angeschlossen werden.

Erfindungsgemäß werden die Sektor-Antennen über einen Antennenumschalter auf den Empfänger geschaltet, wobei der Antennenumschalter zeitgesteuert ist. Durch die Zeitsteuerung ist es möglich, die Sektor-Antennen entsprechend der Sendeintervallen von Verbrauchszählern anzupassen, so dass zum erwarteten Zeitpunkt einer Übertragung keine negative Beeinflussung der Signale stattfindet.

Vorzugsweise können für die Schaltungen der Sektor-Antennen Umschaltmuster vorgesehen sein, derart, dass die Schaltungen der Sektor-Antennen auf den Empfänger zeitlich versetzt stattfinden, so dass die jeweils zugeordneten Sektor-Antennen nicht gleichzeitig auf den Empfänger geschaltet sind. Die Schaltung von Sektor-Antennen auf einen Empfänger kann somit vorteilhafterweise dem aktuellen Bedarf angepasst werden, so dass nicht benötigte Sektor-Antennen vom Empfänger getrennt werden können. Der Empfänger wird damit entlastet und es können Störungen vermieden werden.

Besonders zweckmäßig ist es, wenn auf einen Empfänger jederzeit nur eine der diesem Empfänger zugeordnete Sektor-Antenne auf diesen Empfänger geschaltet ist. Damit kann zweckmäßigerweise sichergestellt werden, dass zu jeder Zeit jeweils nur eine Sektorantenne auf einen Empfänger aufgeschaltet ist. Es kann somit auf einfache Weise eine Leistung der Sektorantenne erreicht werden, wie im Idealfall, dass jeder Sektorantenne ein fester Empfänger zugeordnet ist.

In einer Ausgestaltung der Erfindung kann vorgesehen sein, dass die Sektor-Antennen-Anordnung vier Sektor-Antennen umfasst, sowie zwei Empfänger umfasst, und wobei eine erste und eine zweite Sektor-Antenne einem ersten Empfänger sowie eine dritte und eine vierte Sektor-Antenne einem zweiten Empfänger zugeordnet sind. Bei der Anordnung der vier Sektor-Antennen im Raum gibt es mehrere Möglichkeiten. Eine Möglichkeit besteht darin, die Sektor-Antennen so auszurichten, dass die Ausrichtungen der Sektor-Antennen in einem Winkel von 90° zueinander stehen. Damit besteht ferner die Möglichkeit, in der horizontalen Ebene bezüglich der Sektor-Antennen-Anordnung eine Sektor-Antenne für jeden Quadranten anzuordnen. Bei einer Sektor-Antennen-Anordnung mit vier Sektor-Antennen können verschiedene Umschaltmuster zwischen Sektor-Antennen und Empfänger realisiert werden. Ein mögliches Umschaltmuster könnte beispielsweise vier verschiedene Konfigurationen umfassen, derart, dass in jeder Konfiguration zwei benachbarte, um 90° zueinander rotierte Sektor-Antennen auf jeweils einen Empfänger aufgeschaltet sind.

In einer alternativen Ausgestaltung kann die Sektor-Antennen-Anordnung sechs Antennen umfassen, wobei zwei Empfänger vorgesehen sind, und wobei eine erste, zweite und dritte Sektor-Antenne einem ersten Empfänger sowie eine vierte, fünfte und sechste Sektor-Antenne einem zweiten Empfänger zugeordnet sind. Bei der Anordnung der sechs Sektor-Antennen im Raum gibt es mehrere Möglichkeiten. Eine Möglichkeit besteht darin, die Sektor-Antennen so auszurichten, dass die Ausrichtungen der Sektor-Antennen in einem Winkel von 60° zueinander stehen. Damit besteht ferner die Möglichkeit, in der horizontalen Ebene bezüglich der Sektor-Antennen-Anordnung eine möglichst gleichmäßige Abdeckung mit guten Empfangsleistungen in jeder Richtung zu ermöglichen. Bei einer Sektor-Antennen-Anordnung mit sechs Sektor-Antennen können verschiedene Umschaltmuster zwischen Sektor-Antennen und Empfänger realisiert werden. Ein mögliches Umschaltmuster könnte beispielsweise sechs verschiedene Konfigurationen umfassen, derart, dass in jeder Konfiguration zwei benachbarte, um 60° zueinander rotierte Sektor-Antennen auf jeweils einen Empfänger aufgeschaltet sind.

Wenn in zukünftigen loT-Szenarien die Zählerdichte für loT-Sender steigt, wird auch die Anzahl der Telegrammkollisionen zunehmen. Eine Möglichkeit, diesem Szenario zu begegnen, könnte darin bestehen, eine höhere Anzahl von Antennen mit kleineren Sektoren, zum Beispiel Sektoren von 60° oder 30°, zu verwenden. Wenn die Sektoren kleiner werden, muss ein Kompromiss zwischen der Anzahl von Empfängern und der Empfangszeit in jedem Sektor gefunden werden.

Nebengeordnet beansprucht die vorliegende Erfindung zudem eine Sektor-Antennen-Anordnung, bestehend aus mindestens zwei Sektor-Antennen, welche in unterschiedliche Richtungen weisen, insbesondere in horizontaler Ebene, mindestens einem Empfänger, sowie mindestens einem Antennenumschalter, und wobei jeweils mindestens zwei Sektor-Antennen einem Empfänger zugeordnet sind, indem mindestens zwei Sektor-Antennen über einen Antennenumschalter mit mindestens einem Empfänger verbunden sind, wobei kennzeichnenderweise mindestens eine Antennenumschalter-Steuerung vorgesehen ist, die mit mindestens einem Antennenumschalter verbunden ist, wobei die zugeordneten Sektor-Antennen durch den Antennenumschalter zeitlich veränderlich auf den Empfänger schaltbar sind, und die Sektor-Antennen-Anordnung insbesondere gemäß einem der vorhergehenden Ansprüche betrieben wird.

Besonders wichtig ist die Montage der Sektor-Antennen an einer erhöhten Stelle, um eine möglichst große Abdeckung eines Gebietes zu gewährleisten. Die einzelnen Sektor-Antennen der Sektor-Antennen-Anordnung können beispielsweise auf einem Gebäudedach, auf einem gemeinsamen Mast oder in wenigen Metern Abstand auf getrennten Masten montiert sein. Die einzelnen Sektor-Antennen können vorzugsweise in einem bestimmten Winkelabstand zueinander, insbesondere in horizontaler Ebene, betrieben werden, so dass die Ausrichtungen der Sektor-Antennen einen bestimmten, insbesondere gleichmäßigen, Winkelabstand zueinander aufweisen. Es besteht die Möglichkeit, dass die Sektor-Antennen auf unterschiedlichen Frequenzen betrieben werden. Alternativ können die Sektor-Antennen auf derselben Frequenz betrieben werden oder ein Teil der Sektor-Antennen wird auf derselben Frequenz betrieben. Selbst wenn jede der Sektor-Antennen auf einer anderen Frequenz betrieben wird, kann man deren abgestrahlte und winkelabhängige Leistungen zur Abschätzung der gesamten Strahlungsbelastung miteinander addieren. Dazu können die einzelnen Antennendiagramme gedanklich aufsummiert werden. Durch die Ausrichtungen der einzelnen Sektor-Antennen ist der Beitrag der Nachbarantennen zur Gesamt-Strahlungsleistung in der jeweiligen Hauptstrahlrichtung vorzugsweise vernachlässigbar klein.

Sofern mehr als eine Antennenumschalter-Steuerung in einer Sektor-Antennen-Anordnung verwendet wird, können diese Antennenumschalter-Steuerungen zweckmäßigerweise gekoppelt bzw. verbunden sein, damit z. B. eine Mehrzahl von Antennenumschalter gemeinsam koordiniert bzw. synchron umgeschaltet werden können. Hierdurch kann vorteilhafterweise ein gleichmäßiges Umschalten einer Mehrzahl von Sektor-Antennen gewährleistet werden, selbst falls diese über verschiedene Antennenumschalter mit verschiedenen Empfängern verbunden sind. Diese Mehrzahl an Antennenumschalter-Steuerungen kann somit effektiv eine Steuereinheit bilden, welche die Gesamtheit der Antennenumschalter in einer Sektor-Antennen-Anordnung steuert, und damit die Beschaltung der gesamten Sektor-Antennen-Anordnung steuert. Die Antennenumschalter können zweckmäßigerweise in einem Frequenzbereich von 100 MHz bis 6000 MHz betrieben werden. Mögliche Hersteller von Antennenumschaltern sind z. B. MTS Systemtechnik GmbH, Radiall SA und Scientific Components Corporation Mini-Circuits.

Vorteilhafterweise kann die Sektor-Antennen-Anordnung als Teil einer Basisstation betrieben werden, insbesondere in einem Fixed-Network. Es können somit die benötigten Empfänger für eine Basisstation verringert werden oder bei bestehender Anzahl an Empfängern, die Empfangsleistung erhöht werden.

Besonders zweckmäßig ist es, dass die mindestens zwei Sektor-Antennen in horizontaler und/oder vertikaler Ebene bezüglich der Sektor-Antennen-Anordnung in unterschiedliche Richtungen weisen. Zweckmäßigerweise können die Ausrichtungen der Sektor-Antennen einen Winkelabstand von bis zu 120°, insbesondere bis zu 90°, insbesondere bis zu 60°, insbesondere bis zu 30° aufweisen. Vorteilhafterweise können die Sektor-Antennen eine Halbwertsbreite von bis zu 85°, insbesondere bis zu 60°, insbesondere bis zu 30° aufweisen. Besonders zweckmäßig ist die Abstimmung der Halbwertsbreiten mit den Winkelabständen zwischen den Ausrichtungen der einzelnen Sektor-Antennen. Somit können vorteilhafterweise bei kleineren Halbwertsbreiten die Winkelabstände zwischen den Ausrichtungen, insbesondere in einer gemeinsamen Ebene, verkleinert werden, ohne dass es zu größeren Überlappungen der Abstrahlungskeulen von zwei benachbarten Sektor-Antennen kommt. Damit kann eine größere Anzahl an Richtungen, insbesondere in dieser gemeinsamen Ebene, mit einer dedizierten Sektor-Antenne-Anordnung abgedeckt werden kann.

Vorteilhafterweise können die Sektor-Antennen einen Gewinn von bis zu 18 dBi, insbesondere bis zu 15,5 dBi, insbesondere bis zu 13 dBi, insbesondere bis zu 12 dBi aufweisen. Je kleiner die Antennen-Sektoren sind, desto größer ist für gewöhnlich deren Gewinn (Gain). Eine typische Antenne mit einem Sektor von 30° kann einen Gewinn von etwa 18 dBi haben, im Vergleich zu einer Antenne mit einem Sektor von 85° und einem Gewinn von etwa 13 dBi. Wenn der Antennengewinn erhöht wird, ist eine geringere Anzahl an Empfangsstandorte in einem bestimmten Netzabdeckungsgebiet notwendig. Somit könnten vorteilhafterweise die Kosten für das Einrichten und Betreiben von Empfangsstandorten verringert werden.

Zweckmäßigerweise kann es sich bei dem Empfänger um einen Sender und/oder um einen Transceiver handeln. Somit besteht der Vorteil, dass die Sektor-Antennen bzw. die Sektor-Antennen-Anordnung zum Senden und/oder zum Empfangen von Funktelegrammen bzw. Funknachrichten eingesetzt werden kann.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1a-b: eine vereinfachte schematische Darstellung einer Sektor-Antennen-Anordnung mit zwei Sektor-Antennen sowie eine vereinfachte schematische Darstellung der Abstrahlungskeulen der Sektor-Antennen;
- Fig. 2a-b: eine vereinfachte schematische Darstellung einer Sektor-Antennen-Anordnung mit vier Sektor-Antennen sowie eine vereinfachte schematische Darstellung der Abstrahlungskeulen der Sektor-Antennen;
- Fig. 3a-d: eine vereinfachte schematische Darstellung der Abstrahlungskeulen der Sektor-Antennen bei einem Umschaltmuster für vier Sektor-Antennen;
- Fig. 4a-b: eine vereinfachte schematische Darstellung einer Sektor-Antennen-Anordnung mit sechs Sektor-Antennen sowie eine vereinfachte schematische Darstellung der Abstrahlungskeulen der Sektor-Antennen;
- Fig. 5a-f: eine vereinfachte schematische Darstellung der Abstrahlungskeulen der Sektor-Antennen bei einem Umschaltmuster für sechs Sektor-Antennen; und
- Fig. 6: eine vereinfachte schematische Darstellung eines beispielhaften Verbrauchsdatenerfassungssystems.

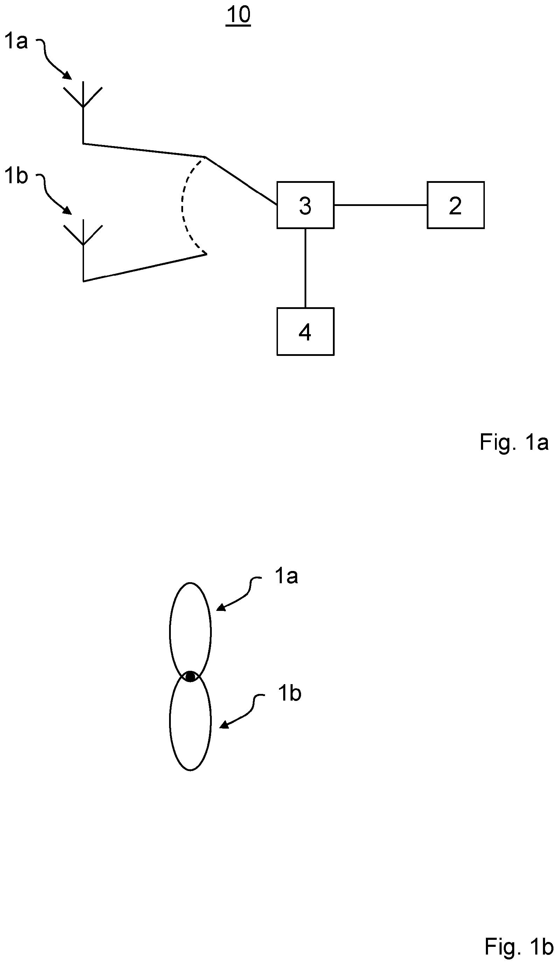

In Fig. 1a wird eine vereinfachte schematische Darstellung einer Sektor-Antennen-Anordnung 10 mit zwei Sektor-Antennen 1a, 1b, einem Empfänger 2, einem Antennenumschalter 3 sowie einer Antennenumschalter-Steuerung 4 gezeigt. Dem Empfänger 2 sind zwei Sektor-Antennen 1a, 1b zugeordnet, die über den Antennenumschalter 3 verbunden sind. Die Antennenumschalter-Steuerung 4 ist mit dem Antennenumschalter 3 verbunden und steuert das Aufschalten der Sektor-Antennen 1a, 1b auf den Empfänger 2. Der Antennenumschalter 3 schaltet wahlweise den Signalpfad der Sektor-Antenne 1a oder 1b auf den Empfänger 2.Im dargestellten Fall in Fig. 1a ist die erste Sektor-Antenne 1a über den Antennenumschalter 3 auf den Empfänger 2 geschaltet. Die Antennenumschalter-Steuerung 4 kann beispielsweise zeitgesteuert sein, so dass zu bestimmten, vorgegebenen Zeitpunkten ein Umschalten initiiert wird. Damit können über die Antennenumschalter-Steuerung 4 die Zeitintervalle für die Aufschaltung der Sektor-Antennen 1a, 1b auf den Empfänger 2 geregelt werden.

Eine vereinfachte schematische Darstellung der Abstrahlungs- und Empfangskeulen der zwei Sektor-Antennen 1a, 1b ist in Fig. 1b gezeigt. Die dargestellten Abstrahlungs- und Empfangskeulen zeigen dabei die Hauptkeulen der Sektor-Antennen 1a, 1b in horizontaler Ebene bezüglich der Sektor-Antennen-Anordnung 10. Die Hauptkeulen weisen dabei einen Winkel von 180° zueinander auf.

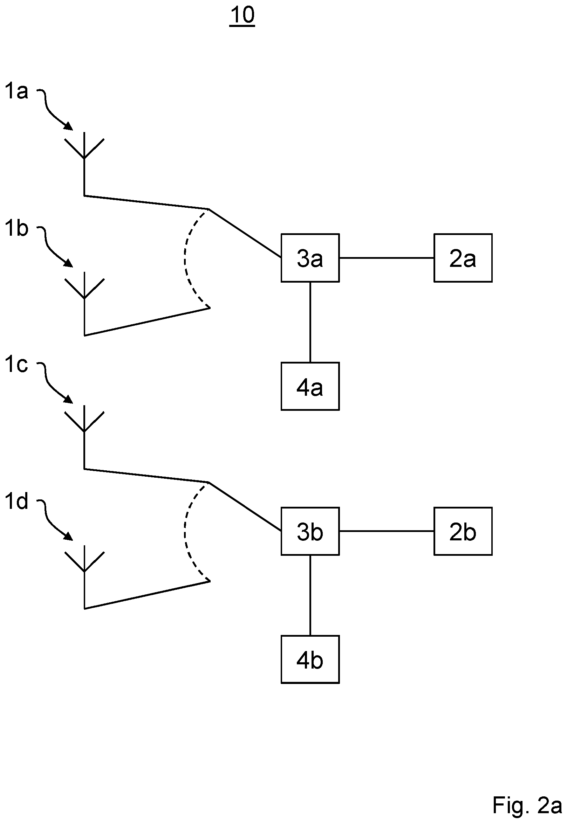

In Fig. 2a wird eine vereinfachte schematische Darstellung einer Sektor-Antennen-Anordnung 10 mit vier Sektor-Antennen 1a, 1b, 1c, 1d, zwei Empfängern 2a, 2b, zwei Antennenumschaltern 3a, 3b sowie zwei Antennenumschalter-Steuerungen 4a, 4b gezeigt. Den Empfängern 2a bzw. 2b sind jeweils zwei Sektor-Antennen 1a, 1b bzw. 1c, 1d zugeordnet, die jeweils über einen Antennenumschalter 3a bzw. 3b verbunden sind. Die Antennenumschalter-Steuerung 4a bzw. 4b ist mit dem Antennenumschal13 ter 3a bzw. 3b verbunden und steuert das Aufschalten der Sektor-Antennen 1a, 1b bzw. 1c, 1d auf den Empfänger 2a bzw. 2b. Der Antennenumschalter 3a schaltet wahlweise den Signalpfad der Sektor-Antenne 1a oder 1b auf den Empfänger 2a und der Antennenumschalter 3b schaltet wahlweise den Signalpfad der Sektor-Antenne 1c oder 1d auf den Empfänger 2b.Im dargestellten Fall in Fig. 2a ist die erste Sektor-Antenne 1a über den ersten Antennenumschalter 3a auf den ersten Empfänger 2a und die dritte Sektor-Antenne 1c über den zweiten Antennenumschalter 3b auf den zweiten Empfänger 2b geschaltet. Die erste und zweite Antennenumschalter-Steuerung 4a, 4b können beispielsweise zusätzlich gekoppelt sein, so dass ein synchrones Umschalten der vier Sektor-Antennen 1a, 1b, 1c, 1d möglich ist. Damit können über die Antennenumschalter-Steuerungen 4a, 4b verschiedene Umschaltmuster durch beliebige Aufschaltung der Sektor-Antennen 1a, 1b bzw. 1c, 1d auf die Empfänger 2a, 2b realisiert werden.

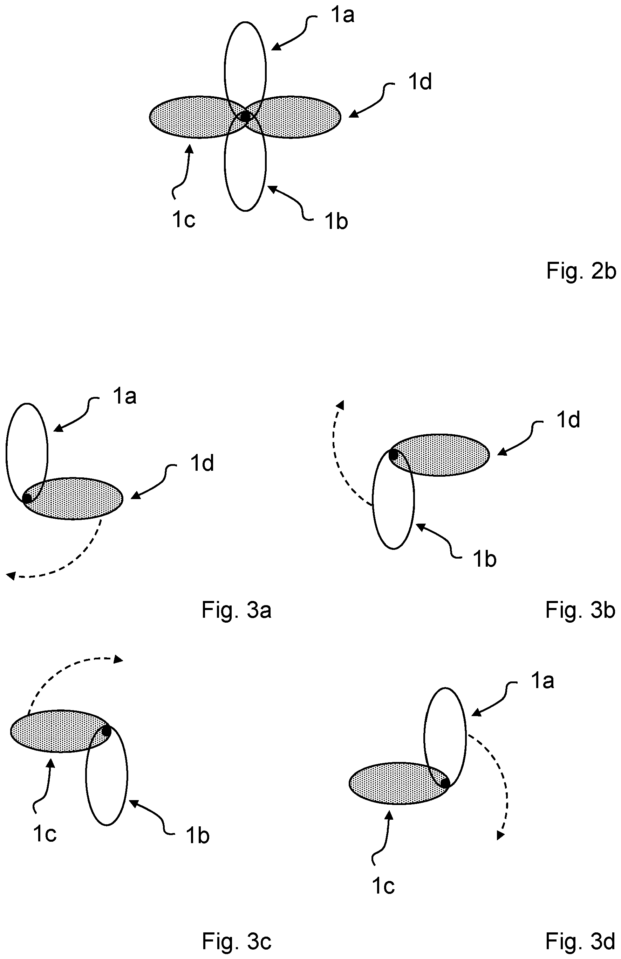

Eine vereinfachte schematische Darstellung der Abstrahlungs- und Empfangskeulen der vier Sektor-Antennen 1a, 1b, 1c, 1d ist in Fig. 2b gezeigt. Die dargestellten Abstrahlungs- und Empfangskeulen zeigen dabei die Hauptkeulen der Sektor-Antennen 1a, 1b, 1c, 1d in horizontaler Ebene bezüglich der Sektor-Antennen-Anordnung 10 als schematische Darstellung. Die einzelnen Hauptkeulen weisen dabei einen Winkel von 90° zueinander auf, wobei die jeweils mit dem gleichen Empfänger 2a bzw. 2b verbundenen Sektor-Antennen 1a, 1b bzw. 1c, 1d einen Winkel von 180° zueinander aufweisen.

In den Fig. 3a bis Fig. 3d sind mögliche Umschaltmuster bei einer Sektor-Antennen-Anordnung 10 mit vier Sektor-Antennen 1a, 1b, 1c, 1d und zwei Empfängern 2a, 2b schematisch dargestellt. In den Fig. 3a bis Fig. 3d sind dabei die jeweils aktiven Sektor-Antennen 1a, 1b, 1c, 1d, welche auf die Empfänger 2a, 2b geschaltet sind, gezeigt. In Fig. 3a ist somit die erste Sektor-Antenne 1a auf den ersten Empfänger 3a und die vierte Sektor-Antenne 1d auf den zweiten Empfänger 3b geschalten. In Fig. 3b ist die zweite Sektor-Antenne 1b auf den ersten Empfänger 3a und die vierte Sektor-Antenne 1d auf den zweiten Empfänger 3b geschalten. In Fig. 3c ist die zweite Sektor-Antenne 1b auf den ersten Empfänger 3a und die dritte Sektor-Antenne 1c auf den zweiten Empfänger 3b geschalten. In Fig. 3d ist die erste Sektor-Antenne 1a auf den ersten Empfänger 3a und die dritte Sektor-Antenne 1c auf den zweiten Empfänger 3b geschalten. Diese vier Umschaltmuster in den Fig. 3a bis Fig. 3d können zeitlich nacheinander geschalten werden, so dass die aktiven Sektor-Antennen 1a, 1b, 1c, 1d um die Achse der Sektor-Antennen-Anordnung 10 rotieren.

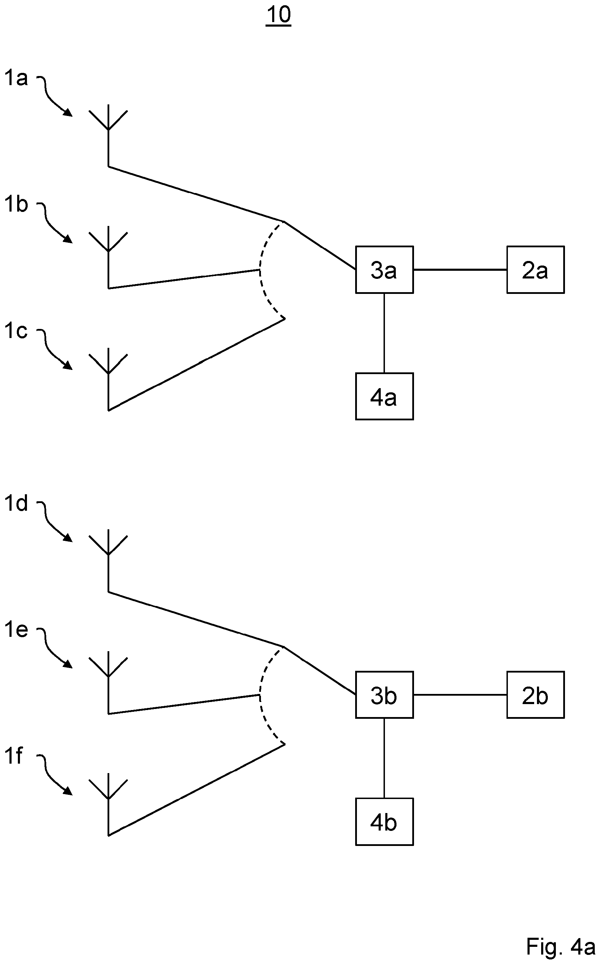

In Fig. 4a wird eine vereinfachte schematische Darstellung einer Sektor-Antennen-Anordnung 10 mit sechs Sektor-Antennen 1a, 1b, 1c, 1d, 1e, 1f, zwei Empfängern 2a, 2b, zwei Antennenumschaltern 3a, 3b sowie zwei Antennenumschalter-Steuerungen 4a, 4b gezeigt. Den Empfängern 2a bzw. 2b sind jeweils drei Sektor-Antennen 1a, 1b, 1c bzw. 1d, 1e, 1f zugeordnet, die jeweils über einen Antennenumschalter 3a bzw. 3b verbunden sind. Die Antennenumschalter-Steuerung 4a bzw. 4b ist mit dem Antennenumschalter 3a bzw. 3b verbunden und steuert das Aufschalten der Sektor-Antennen 1a, 1b, 1c bzw. 1d, 1e, 1f auf den Empfänger 2a bzw. 2b. Der Antennenumschalter 3a schaltet wahlweise den Signalpfad der Sektor-Antenne 1a, 1b oder 1c auf den Empfänger 2a und der Antennenumschalter 3b schaltet wahlweise den Signalpfad der Sektor-Antenne 1d, 1e oder 1f auf den Empfänger 2b. Im dargestellten Fall in Fig. 4a ist die erste Sektor-Antenne 1a über den ersten Antennenumschalter 3a auf den ersten Empfänger 2a und die vierte Sektor-Antenne 1d über den zweiten Antennenumschalter 3b auf den zweiten Empfänger 2b geschaltet. Die erste und zweite Antennenumschalter-Steuerung 4a, 4b können beispielsweise zusätzlich gekoppelt sein, so dass ein synchrones Umschalten der sechs Sektor-Antennen 1a, 1b, 1c, 1d, 1e, 1f möglich ist. Damit können über die Antennenumschalter-Steuerungen 4a, 4b verschiedene Umschaltmuster durch beliebige Aufschaltung der Sektor-Antennen 1a, 1b, 1c bzw. 1d, 1e, 1f auf die Empfänger 2a, 2b realisiert werden.

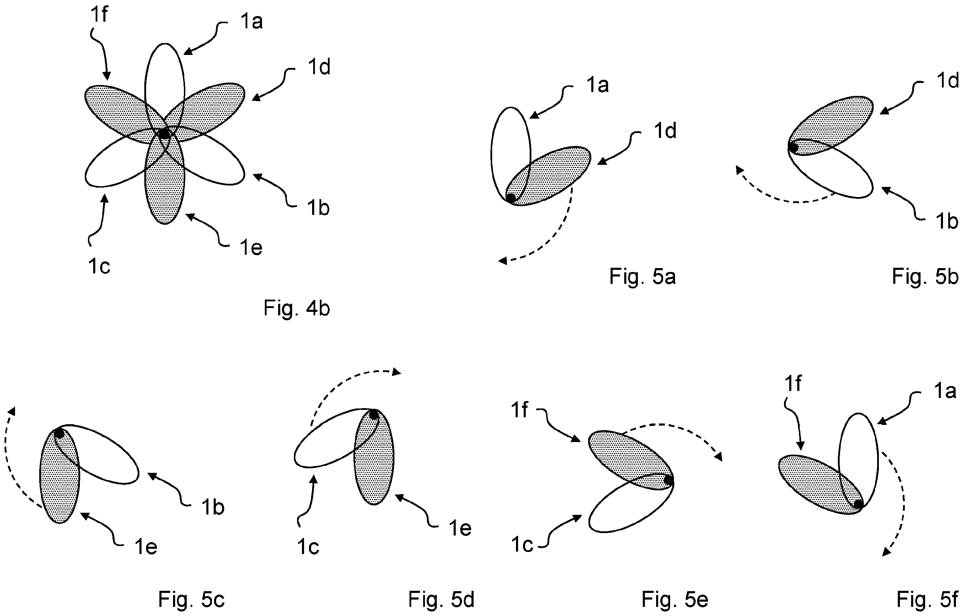

Eine vereinfachte schematische Darstellung der Abstrahlungs- und Empfangskeulen der sechs Sektor-Antennen 1a, 1b, 1c, 1d, 1e, 1f ist in Fig. 4b gezeigt. Die dargestellten Abstrahlungs- und Empfangskeulen zeigen dabei die Hauptkeulen der Sektor-Antennen 1a, 1b, 1c, 1d, 1e, 1f in horizontaler Ebene bezüglich der Sektor-Antennen-Anordnung 10 als schematische Darstellung. Die einzelnen Hauptkeulen weisen dabei einen Winkel von 60° zueinander auf, wobei die jeweils mit dem gleichen Empfänger 2a bzw. 2b verbundenen Sektor-Antennen 1a, 1b, 1c bzw. 1d, 1e, 1f einen Winkel von 120° zueinander aufweisen.

In den Fig. 5a bis Fig. 5f sind mögliche Umschaltmuster bei einer Sektor-Antennen-Anordnung 10 mit sechs Sektor-Antennen 1a, 1b, 1c, 1d, 1e, 1f und zwei Empfängern 2a, 2b schematisch dargestellt. In den Fig. 5a bis Fig. 5f sind dabei die jeweils aktiven Sektor-Antennen 1a, 1b, 1c, 1d, 1e, 1f, welche auf die Empfänger 2a, 2b geschaltet sind, gezeigt. In Fig. 5a ist somit die erste Sektor-Antenne 1a auf den ersten Empfänger 3a und die vierte Sektor-Antenne 1d auf den zweiten Empfänger 3b geschalten. In Fig. 5b ist die zweite Sektor-Antenne 1b auf den ersten Empfänger 3a und die vierte Sektor-Antenne 1d auf den zweiten Empfänger 3b geschalten. In Fig. 5c ist die zweite Sektor-Antenne 1b auf den ersten Empfänger 3a und die fünfte Sektor-Antenne 1e auf den zweiten Empfänger 3b geschalten. In Fig. 5d ist die dritte Sektor-Antenne 1c auf den ersten Empfänger 3a und die fünfte Sektor-Antenne 1e auf den zweiten Empfänger 3b geschalten. In Fig. 5e ist die dritte Sektor-Antenne 1c auf den ersten Empfänger 3a und die sechste Sektor-Antenne 1f auf den zweiten Empfänger 3b geschalten. In Fig. 5f ist die erste Sektor-Antenne 1a auf den ersten Empfänger 3a und die sechste Sektor-Antenne 1f auf den zweiten Empfänger 3b geschalten. Diese sechs Umschaltmuster in den Fig. 5a bis Fig. 5f können zeitlich nacheinander geschalten werden, so dass die aktiven Sektor-Antennen 1a, 1b, 1c, 1d, 1e, 1f um die Achse der Sektor-Antennen-Anordnung 10 rotieren.

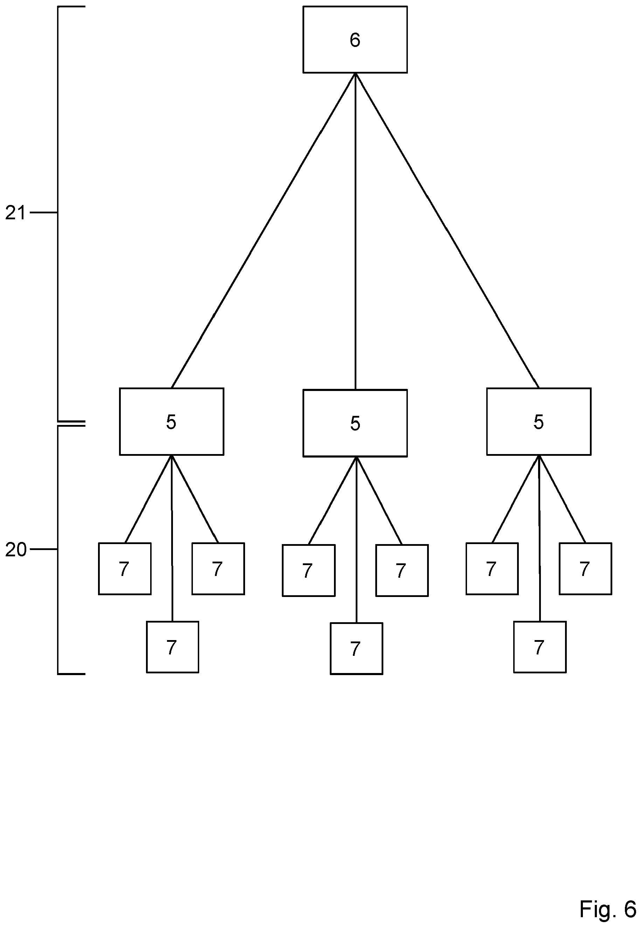

Fig. 6 zeigt eine schematische Darstellung eines Fixed Networks, z. B. ein Verbrauchsdatenerfassungssystem für Smart Metering. Es umfasst in der tertiären Kommunikationsstufe 21 ein Head-End-System 6, und mehrere, z. B. drei, Basisstationen 5. Dabei kann jede der Basisstationen 5 als System-Teilnehmer der tertiären Kommunikationsstufe 21 mit dem Head-End-System 6 kommunizieren. In der primären Kommunikationsstufe 20 sind für jede Basisstation 5 exemplarisch drei untergeordnete Endgeräte 7, z. B. Verbrauchszähler, dargestellt. Die Endgeräte 7 stehen dabei nicht direkt mit dem tertiären Kommunikationssystem 21 in Verbindung, sondern lediglich indirekt über die Basisstationen 5. Jede der Basisstationen 5 umfasst eine Sektor-Antennen-Anordnung 10.

### BEZUGSZEICHENLISTE

- 1: Sektor-Antenne
- 2: Empfänger
- 3: Antennenumschalter
- 4: Antennenumschalter-Steuerung
- 5: Basisstation
- 6: Head-End-System
- 7: Endgerät

- 10: Sektor-Antennen-Anordnung

- 20: primäre Kommunikationsstufe
- 21: tertiäre Kommunikationsstufe

## Patentansprüche

1. Verfahren zum Betrieb einer Sektor-Antennen-Anordnung (10) in einer Basisstation (5), wobei Verbrauchszähler anfallende Messdaten von Verbrauchszählern in Form von Datenpaketen oder Datentelegrammen per Funk an die Basisstation (5) übertragen, wobei
die Sektor-Antennen-Anordnung (10) mindestens zwei Sektor-Antennen (1a, 1b) umfasst, welche in unterschiedliche Richtungen weisen, insbesondere in horizontaler Ebene, sowie
mindestens einen Empfänger (2) umfasst, wobei
jeweils mindestens zwei Sektor-Antennen (1a, 1b) einem Empfänger (2) zugeordnet sind, indem die mindestens zwei Sektor-Antennen (1a, 1b) über einen Antennenumschalter (3) mit dem mindestens einem Empfänger (2) verbunden sind, wobei
die zugeordneten Sektor-Antennen (1a, 1b) zeitlich veränderlich auf den Empfänger (2) geschaltet werden, wobei
die Sektor-Antennen (1a, 1b) über den Antennenumschalter (3) auf den Empfänger (2) geschaltet werden, wobei der Antennenumschalter (3) zeitgesteuert ist und die Sektor-Antennen (1a, 1b) entsprechend den Sendeintervallen der Verbrauchszähler angepasst werden, und wobei
für die Schaltungen der Sektor-Antennen (1a, 1b) Umschaltmuster vorgesehen sind, derart, dass die Schaltungen der Sektor-Antennen (1a, 1b) auf den Empfänger (2) zeitlich versetzt stattfinden, so dass die jeweils zugeordneten Sektor-Antennen (1a, 1b) nicht gleichzeitig auf den Empfänger (2) geschaltet sind.

2. Verfahren nach Anspruch 1, **dadurch gekennzeichnet, dass** auf einen Empfänger (2) jederzeit nur eine der diesem Empfänger (2) zugeordneten Sektor-Antennen (1a, 1b) auf diesen Empfänger (2) geschaltet ist.

3. Verfahren nach mindestens einem der vorhergehenden Ansprüche,
**dadurch gekennzeichnet, dass** die Sektor-Antennen-Anordnung (10) vier Sektor-Antennen (1a, 1b, 1c, 1d) umfasst, sowie zwei Empfänger (2a, 2b) umfasst, und wobei eine erste und eine zweite Sektor-Antenne (1a, 1b) einem ersten Empfänger (2a) sowie eine dritte und eine vierte Sektor-Antenne (1c, 1d) einem zweiten Empfänger (2b) zugeordnet sind.

4. Verfahren nach einem der Ansprüche 1 bis 2, **dadurch gekennzeichnet,**
**dass** die Sektor-Antennen-Anordnung (10) sechs Antennen (1a, 1b, 1c, 1d, 1e, 1f) sowie zwei Empfänger (2a, 2b) umfasst, wobei eine erste, zweite und dritte Sektor-Antenne (1a, 1b, 1c) einem ersten Empfänger (2a) sowie eine vierte, fünfte und sechste Sektor-Antenne (1d, 1e, 1f) einem zweiten Empfänger (2b) zugeordnet sind.

5. Anordnung umfassend Verbrauchszähler und eine Basisstation (5) mit einer Sektor-Antennen-Anordnung (10), bestehend aus
mindestens zwei Sektor-Antennen (1a, 1b), welche in unterschiedliche Richtungen weisen, insbesondere in horizontaler Ebene,
mindestens einem Empfänger (2), sowie
mindestens einem Antennenumschalter (3), und wobei
jeweils mindestens zwei Sektor-Antennen (1a, 1b) einem Empfänger (2) zugeordnet sind, indem mindestens zwei Sektor-Antennen (1a, 1b) über einen Antennenumschalter (3) mit mindestens einem Empfänger (2) verbunden sind, wobei
die Sektor-Antennen-Anordnung (10) mindestens eine Antennenumschalter-Steuerung (4) umfasst, die mit mindestens einem Antennenumschalter (3) verbunden ist, wobei
die zugeordneten Sektor-Antennen (1a, 1b) durch den Antennenumschalter (3) zeitlich veränderlich auf den Empfänger (2) schaltbar sind,
die Sektor-Antennen-Anordnung (10) dazu eingerichtet ist, ein Verfahren gemäß einem der vorhergehenden Ansprüche durchzuführen, wobei die Sektor-Antennen-Anordnung (10) Teil der Basisstation (5) ist, insbesondere in einem Fixed-Network.

6. Anordnung nach Anspruch 5, **dadurch gekennzeichnet, dass** die mindestens zwei Sektor-Antennen (1a, 1b) in horizontaler und/oder vertikaler Ebene bezüglich der Sektor-Antennen-Anordnung (10) in unterschiedliche Richtungen weisen.

7. Anordnung nach Anspruch 6, **dadurch gekennzeichnet, dass** die Abstrahlungs-Richtungen der Sektor-Antennen (1a, 1b) einen Winkelabstand von bis zu 120°, insbesondere bis zu 90°, insbesondere bis zu 60°, insbesondere bis zu 30° aufweisen.

8. Anordnung nach einem der Ansprüche 5 bis 7, **dadurch gekennzeichnet, dass** die Sektor-Antennen (1a, 1b) eine Halbwertsbreite von bis zu 85°, insbesondere bis zu 60°, insbesondere bis zu 30° aufweisen.

9. Anordnung nach einem der Ansprüche 5 bis 8, **dadurch gekennzeichnet, dass** die Sektor-Antennen (1a, 1b) einen Gewinn von bis zu 18 dBi, insbesondere bis zu 15,5 dBi, insbesondere bis zu 13 dBi, insbesondere bis zu 12 dBi aufweisen.

10. Anordnung nach einem der Ansprüche 5 bis 9, **dadurch gekennzeichnet, dass** es sich bei dem Empfänger (2) um einen Sender und/oder um einen Transceiver handelt.

## Claims

1. Method for operating a sector antenna arrangement (10) in a base station (5), wherein consumption meters transmit measurement data obtained from consumption meters to the base station (5) by radio in the form of data packets or data telegrams, wherein the sector antenna arrangement (10) comprises at least two sector antennas (1a, 1b) pointing in different directions, in particular in the horizontal plane, and comprises at least one receiver (2), wherein at least two sector antennas (1a, 1b) are each assigned to a receiver (2) by virtue of the at least two sector antennas (1a, 1b) being connected to the at least one receiver (2) via an antenna changeover switch (3), wherein the assigned sector antennas (1a, 1b) are connected to the receiver (2) variably over time, wherein the sector antennas (1a, 1b) are connected to the receiver (2) via the antenna changeover switch (3), wherein the antenna changeover switch (3) is time-controlled and the sector antennas (1a, 1b) are appropriately matched to the transmission intervals of the consumption meters, and wherein there is provision for changeover switching patterns for the switching operations of the sector antennas (1a, 1b) in such a way that the sector antennas (1a, 1b) are connected to the receiver (2) at staggered times such that the respectively assigned sector antennas (1a, 1b) are not connected to the receiver (2) at the same time.

2. Method according to Claim 1, **characterized in that**, to a receiver (2), only one of the sector antennas (1a, 1b) assigned to this receiver (2) is connected to this receiver (2) at any time.

3. Method according to at least one of the preceding claims, **characterized in that** the sector antenna arrangement (10) comprises four sector antennas (1a, 1b, 1c, 1d), and comprises two receivers (2a, 2b), and wherein a first and a second sector antenna (1a, 1b) are assigned to a first receiver (2a) and a third and a fourth sector antenna (1c, 1d) are assigned to a second receiver (2b) .

4. Method according to either of Claims 1 and 2, **characterized in that** the sector antenna arrangement (10) comprises six antennas (1a, 1b, 1c, 1d, 1e, 1f) and two receivers (2a, 2b), wherein a first, second and third sector antenna (1a, 1b, 1c) are assigned to a first receiver (2a) and a fourth, fifth and sixth sector antenna (1d, 1e, 1f) are assigned to a second receiver (2b) .

5. Arrangement comprising consumption meters and a base station (5) having a sector antenna arrangement (10) consisting of at least two sector antennas (1a, 1b) pointing in different directions, in particular in the horizontal plane, at least one receiver (2), and at least one antenna changeover switch (3), and wherein at least two sector antennas (1a, 1b) are each assigned to a receiver (2) by virtue of at least two sector antennas (1a, 1b) being connected to at least one receiver (2) via an antenna changeover switch (3), wherein the sector antenna arrangement (10) comprises at least one antenna changeover switch controller (4) which is connected to at least one antenna changeover switch (3), wherein the antenna changeover switch (3) is able to connect the assigned sector antennas (1a, 1b) to the receiver (2) variably over time, the sector antenna arrangement (10) being configured to carry out a method according to one of the preceding claims, wherein the sector antenna arrangement (10) is part of the base station (5), in particular in a fixed network.

6. Arrangement according to Claim 5, **characterized in that** the at least two sector antennas (1a, 1b) point in different directions in the horizontal and/or vertical plane with respect to the sector antenna arrangement (10) .

7. Arrangement according to Claim 6, **characterized in that** the radiation directions of the sector antennas (1a, 1b) have an angular distance of up to 120°, in particular up to 90°, in particular up to 60°, in particular up to 30°.

8. Arrangement according to one of Claims 5 to 7, **characterized in that** the sector antennas (1a, 1b) have a full width at half maximum of up to 85°, in particular up to 60°, in particular up to 30°.

9. Arrangement according to one of Claims 5 to 8, **characterized in that** the sector antennas (1a, 1b) have a gain of up to 18 dBi, in particular up to 15.5 dBi, in particular up to 13 dBi, in particular up to 12 dBi.

10. Arrangement according to one of Claims 5 to 9, **characterized in that** the receiver (2) is a transmitter and/or a transceiver.

## Revendications

1. Procédé de fonctionnement d'un agencement d'antennes sectorielles (10) dans une station de base (5), dans lequel
des compteurs de consommation transmettent par radio à la station de base (5) des données de mesure produites par des compteurs de consommation sous forme de paquets de données ou de télégrammes de données, dans lequel
l'agencement d'antennes sectorielles (10) comprend au moins deux antennes sectorielles (1a, 1b) qui sont orientées dans des directions différentes, en particulier dans le plan horizontal, et
au moins un récepteur (2), dans lequel
au moins deux antennes sectorielles (1a, 1b) sont respectivement associées à un récepteur (2), lesdites au moins deux antennes sectorielles (1a, 1b) étant reliées audit au moins un récepteur (2) par l'intermédiaire d'un commutateur d'antennes (3), dans lequel
les antennes sectorielles (1a, 1b) associées sont commutées sur le récepteur (2) de manière variable dans le temps, dans lequel
les antennes sectorielles (1a, 1b) sont commutées sur le récepteur (2) par l'intermédiaire du commutateur d'antennes (3), dans lequel le commutateur d'antennes (3) est commandé dans le temps et les antennes sectorielles (1a, 1b) sont adaptées en fonction des intervalles d'émission des compteurs de consommation, et dans lequel des motifs de commutation sont prévus pour les commutations des antennes sectorielles (1a, 1b) de telle manière que les commutations des antennes sectorielles (1a, 1b) sur les récepteurs (2) aient lieu de manière décalée dans le temps, de sorte que les antennes sectorielles (1a, 1b) respectivement associées ne soient pas commutées simultanément sur le récepteur (2).

2. Procédé selon la revendication 1, **caractérisé en ce qu'**à tout moment, sur un récepteur (2), une seule des antennes sectorielles (1a, 1b) associées à ce récepteur (2) est commutée sur ce récepteur (2).

3. Procédé selon au moins l'une des revendications précédentes, **caractérisé en ce que** l'agencement d'antennes sectorielles (10) comprend quatre antennes sectorielles (1a, 1b, 1c, 1d), et comprend deux récepteurs (2a, 2b), et dans lequel des première et deuxième antennes sectorielles (1a, 1b) sont associées à un premier récepteur (2a) et des troisième et quatrième antennes sectorielles (1c, 1d) sont associées à un deuxième récepteur (2b).

4. Procédé selon l'une quelconque des revendications 1 à 2, **caractérisé en ce que** l'agencement d'antennes sectorielles (10) comprend six antennes (1a, 1b, 1c, 1d, 1e, 1f) ainsi que deux récepteurs (2a, 2b), dans lequel des première, deuxième et troisième antennes sectorielles (1a, 1b, 1c) sont associées à un premier récepteur (2a) et des quatrième, cinquième et sixième antennes sectorielles (1d, 1e, 1f) sont associées à un deuxième récepteur (2b).

5. Agencement comprenant des compteurs de consommation et une station de base (5) dotée d'un agencement d'antennes sectorielles (10), constitué
d'au moins deux antennes sectorielles (1a, 1b) orientées dans des directions différentes, en particulier dans le plan horizontal,
d'au moins un récepteur (2), ainsi que
d'au moins un commutateur d'antennes (3), et dans lequel au moins deux antennes sectorielles (1a, 1b) sont respectivement associées à un récepteur (2), au moins deux antennes sectorielles (1a, 1b) étant reliées à au moins un récepteur (2) par l'intermédiaire d'un commutateur d'antennes (3), dans lequel
l'agencement d'antennes sectorielles (10) comprend au moins un dispositif de commande de commutateur d'antennes (4) qui est relié à au moins un commutateur d'antennes (3), dans lequel
les antennes sectorielles (1a, 1b) associées peuvent être commutées de manière variable temps sur le récepteur (2) par le commutateur d'antennes (3),
l'agencement d'antennes sectorielles (10) est conçu pour mettre en œuvre un procédé selon l'une quelconque des revendications précédentes, dans lequel
l'agencement d'antennes sectorielles (10) fait partie de la station de base (5), en particulier dans un réseau fixe.

6. Agencement selon la revendication 5, **caractérisé en ce que** lesdites au moins deux antennes sectorielles (1a, 1b) sont orientées dans des directions différentes dans un plan horizontal et/ou vertical par rapport à l'agencement d'antennes sectorielles (10).

7. Agencement selon la revendication 6, **caractérisé en ce que** les directions de rayonnement des antennes sectorielles (1a, 1b) présentent un écart angulaire allant jusqu'à 120°, en particulier jusqu'à 90°, notamment jusqu'à 60°, notamment jusqu'à 30°.

8. Agencement selon l'une quelconque des revendications 5 à 7, **caractérisé en ce que** les antennes sectorielles (1a, 1b) présentent une largeur à mi-hauteur allant jusqu'à 85°, en particulier jusqu'à 60°, notamment jusqu'à 30°.

9. Agencement selon l'une quelconque des revendications 5 à 8, **caractérisé en ce que** les antennes sectorielles (1a, 1b) présentent un gain allant jusqu'à 18 dBi, en particulier jusqu'à 15,5 dBi, notamment jusqu'à 13 dBi, notamment jusqu'à 12 dBi.

10. Agencement selon l'une quelconque des revendications 5 à 9, **caractérisé en ce que** le récepteur (2) est un émetteur et/ou un émetteur-récepteur.
